Europäisches Patentamt

European Patent Office

Office européen des brevets

(11) Publication number: **0 029 331**
**B1**

## (12) EUROPEAN PATENT SPECIFICATION

(45) Date of publication of patent specification: **01.10.86**

(51) Int. Cl.⁴: **G 06 F 15/16,** G 06 F 13/00, G 06 F 13/12

(21) Application number: **80304015.3**

(22) Date of filing: **11.11.80**

(54) Inter-subsystem communication system.

(30) Priority: **12.11.79 JP 146164/79**

(43) Date of publication of application:
**27.05.81 Bulletin 81/21**

(45) Publication of the grant of the patent:
**01.10.86 Bulletin 86/40**

(84) Designated Contracting States:
**DE FR GB**

(56) References cited:
**US-A-3 487 370**
**US-A-4 065 810**

**COMPUTER DESIGN, vol. 18, no. 7, July 1979, pages 120-124, 126, Concord, U.S.A., C.A. SAMUELSON: "Intelligent controller increases data throughput, reduces host overhead"**

**IBM TECHNICAL DISCLOSURE BULLETIN, vol.13, no. 8, January 1971, page 2382, New York, U.S.A., D.J. LUCAS: "Address chaining mode in channel operations"**

**IBM TECHNICAL DISCLOSURE BULLETIN, vol. 19, no. 3, August 1976, pages 847-848, M.J. MITCHELL et al.: "Channel-to-channel adapter for linking two data processors"**

(73) Proprietor: **FUJITSU LIMITED**
**1015, Kamikodanaka Nakahara-ku**
**Kawasaki-shi Kanagawa 211 (JP)**

(72) Inventor: **Tsuchimoto, Takamitsu**
**2-12-10, Kuriya Tama-ku**
**Kawasaki-shi Kanagawa 214 (JP)**
Inventor: **Kaneda, Saburo**
**516-1, Mamedo-cho Kohoku-ku**
**Yokohama-shi Kanagawa 222 (JP)**
Inventor: **Miyazawa, Tatsushi**
**1802, Nagao Takatsu-ku**
**Kawasaki-shi Kanagawa 213 (JP)**
Inventor: **Shimada, Toshio**
**1241-4, Okamoto Kamakura-shi**
**Kanagawa, 247 (JP)**
Inventor: **Suzuki, Hideo**
**28-9, Tsunashimahigashi 5-chome, Kohoku-ku**
**Yokohama-shi Kanagawa 223 (JP)**
Inventor: **Sanagi, Mitsuru**
**1-20--4-303, Utsukushigaoka Midori-ku**
**Yokohama-shi Kanagawa 227 (JP)**
Inventor: **Hiraoka, Kaoru**
**2-1-27-404, Yokodai Isogo-ku**
**Yokohama-shi Kanagawa 235 (JP)**

(74) Representative: **Bedggood, Guy Stuart et al**
**Haseltine Lake & Co. Hazlitt House 28**
**Southampton Buildings Chancery Lane**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

(56) References cited:
**IBM TECHNICAL DISCLOSURE BULLETIN, vol. 19, no. 1, June 1976, pages 217-221, New York, U.S.A., W.W. COLLIER et al.: "Queued communication interface"**

## Description

This invention relates to an inter-subsystem communication system, that is, to a communication system operating between a plurality of computer systems (subsystems).

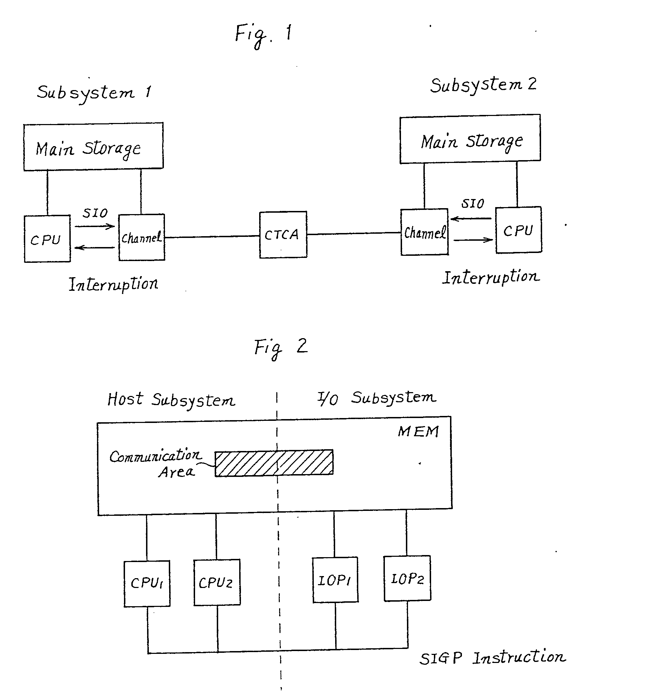

As inter-subsystem connection systems, an inter-subsystem connecting system operating by means of an inter-channel connection system CTCA as indicated in Fig. 1 of the accompanying drawings, which is a schematic block diagram, and a connecting system utilizing communication between multiprocessors as indicated in Fig. 2 of the accompanying drawings, which is a schematic block diagram, have been used conventionally.

In the arrangement of Fig. 1 respective subsystems 1 and 2 each include a main storage, a CPU and a channel. The CTCA establishes a communication link connecting the subsystems 1 and 2. When a start IO instruction (SIO instruction) is issued for a communication from the CPU of one subsystem to a channel, the channel reads a channel address word CAW on the main storage, decodes the contents of a channel control word CCW at the address specified by the CAW, and executes processing accordingly.

Such an inter-subsystem connecting system operating by means of a CTCA suffers from the following problems. Namely,

(i) CTCA operations can be instructed only in the form of a CCW and it is difficult to request processing offering high grade intelligence.

(ii) a CPU is always informed of termination of a CTCA operation by means of an interruption and therefore overheads involved in dealing with interruptions become large.

(iii) it is difficult for a CPU to designate a priority sequence of channel execution programs.

Figure 2 shows a conventional example of an I/O sub-system which is structured in a conventional multi-processor system.

In Fig. 2, to the left side of the broken line is a host subsystem, while to the right side of the broken line is an I/O subsystem.

Main storage (MEM) stores instructions for $CPU_1$ and $CPU_2$, data for $CPU_1$ and $CPU_2$, instructions for I/O processors $IOP_1$ and $IOP_2$, data for I/O processors $IOP_1$ and $IOP_2$, and data for communication. In a MEM area for data (information) for communication (communication area), for example, contents relating to processing requested of the I/O subsystem by the host system are written. When a SIG—P instruction is issued to the I/O subsystem from the host system an interruption is reported to an I/O processor $IOP_1$ or $IOP_2$, I/O processor $IOP_1$ or $IKOP_2$ reads the data (information) written in the communication area and executes operation in accordance with such contents. In the case of a system as indicated in Fig. 2, information relating to the SIG—P instruction on the common memory forms communication means. The system of Figure 2 has the following problems.

(I) With the SIG—P instruction, an interruption is reported by specifying a particular processor and therefore the message issuing subsystem must check the condition of the opposite subsystem and determine the message receiving processor and the adequacy of interruption thereof.

(II) Since the subsystems are tightly coupled, it is difficult to extend the physical distance between subsystems and efficiency is degraded.

According to the present invention there is provided an intersubsystem communication system, comprising a communication channel, having sender and receiver sides, and sender and receiver subsystems, between which the channel is connected, having each:

a plurality $(n, m)$ of buffers on main storage,

a buffer address table, on main storage, having a plurality of entries each containing header address and length or final address information for a corresponding buffer, and

a buffer control block, on main storage or on a register of the subsystem, including the header address and the number of entries of the buffer address table, and enqueue and dequeue pointers indicating the respective addresses of entries in the buffer address table relating to data to be enqueued next and data to be dequeued next;

whereby programs are operable to enqueue data continuously, by placing data as queue elements in successive buffers of such a subsystem and successively updating the enqueue pointer pertinent to those buffers, until further updating of that pointer would cause it to coincide with the pertinent dequeue pointer, and are operable to dequeue data, from buffers in such a subsystem, until the pertinent enqueue and dequeue pointers coincide,

the sender side comprising,

a sender sub-channel, operable to read the sender subsystem pointers,

comparison means, operable to compare those pointers and on the basis of the result of the comparison to recognise a condition in which the sender subsystem buffers contain a queue element for transfer to the receiver subsystem buffers via the communication channel,

means operable, in the event of such recognition, to transmit an enquiry signal to the receiver side, to determine whether or not the receiver subsystem buffers are able to accept such transfer of a queue element,

the sender sub-channel being further operable to interpret a reply signal sent from the receiver side in response to the enquiry signal, and when the reply signal indicates that such transfer can be accepted, to initiate a queue element transfer operation to store the queue element for transfer in a receiver subsystem buffer and to update the sender subsystem dequeue pointer when the transfer operation is complete, as indicated by a transfer completion signal sent from the receiver side,

the receiver side comprising,

a receiver sub-channel, operable upon receipt of the enquiry signal to read the receiver subsystem pointers,

comparison means, operable to compare those pointers and on the basis of the result of the comparison to recognise a condition in which the receiver subsystem buffers are able to accept transfer thereto of a queue element,

means operable to provide the said reply signal, indicating whether or not transfer is acceptable,

the receiver sub-channel being further operable, when a queue element has been transferred and stored in a receiver subsystem buffer, to update the receiver subsystem enqueue pointer and to issue the said transfer completion signal.

The present invention is intended to offer an inter-subsystem communication system which satisfies or more nearly satisfies the following requirements.

(1) A protocol of a logically high level is used for communication between subsystems.

(2) The number of interruptions required for inter-subsystem communications are minimized.

(3) Requests are transmitted to subsystems in accordance with priority thereof and priority processing is carried out correctly between subsystems.

(4) Degradation of efficiency and increase in hardware requirement when there is a long inter-subsystem physical distance is minimized.

(5) Recovery processing when a hardware error has occurred is effected efficiently by means of the operating system.

(6) Highly efficient data transfer and a high speed response characteristic can be assured.

(7) Wide application to systems, from a simple inter-system coupling to a complex system, is possible, and in addition application to system structures utilizing special purpose subsystems is possible.

In an embodiment of this invention a data processing system comprising first and second subsystems which operate under control of independent operating systems or of a common operating system are provided,

a sender subsystem has $n$ sender buffers while a receiver subsystem has $m$ receiving buffers on respective main storages,

the sender subsystem has a sending buffer address table having $n$ entries while the receiver subsystem has a receiving buffer address table having $m$ entries on the respective main storages,

each of the entries contains header address information of corresponding sending and receiving buffers and length information or final address information of a relevant buffer,

the sender subsystem has a buffer control block including the head address of the sending buffer address table, the number of entries of that table, an enqueue pointer which indicates a buffer address stored in the table to be enqueued next, and a dequeue pointer which indicates a buffer address stored in the table to be dequeued next, on the main storage or on a register of the relevant sender subsystem,

the receiver subsystem has a buffer control block including the header address of the receiving buffer address table, the number of entries of that table, an enqueue pointer which indicates a buffer address stored in the table to be enqueued next, and a dequeue pointer which indicates a buffer address stored in the table to be dequeued next, on the main storage or on a register of the relevant receiver subsystem, and

communication paths are provided for transferring data stored in the sending buffers of the sender subsystem to the receiving buffers of the corresponding receiver subsystem.

An inter-subsystem communication system embodying this invention can realize highly efficient data transfer by making it unnecessary to issue a start input/output device instruction (SIO instruction) for each data transfer and by reducing the number of times interruptions are generated.

Reference is made, by way of example, to the accompanying drawings in which:—

Figure 1 is a schematic block diagram of an inter-subsystem connecting system operating by means of an inter-channel connecting system,

Figure 2 is a schematic block diagram of a multi-processor communication system,

Figure 3 is a schematic block diagram which indicates the concept of a communication link in an embodiment of this invention,

Figure 4 schematically illustrates parts of a communication system embodying this invention,

Figure 5 is a diagram of CAW format,

Figure 6 is a diagram of CCW format,

Figure 7 is a diagram of BCB format,

Figure 8 is a diagram of BAT format,

Figure 9 is a diagram showing the profile of the F field of BAW, and

Figure 10 is a schematic block diagram of a communication channel of an embodiment of this invention.

A communication link as employed in an embodiment of this invention will first be explained.

In an embodiment of this invention a special purpose communication channel is provided, and this communication channel is provided between two subsystems (sender and receiver subsystems) and is connected physically. The communication channel generally comprises a plurality of sender sub-channels or receiver sub-channels. The sender sub-channels of one subsystem are connected to the receiver sub-channels of the other subsystem on a one to one basis, and each sub-channel forms a logically independent communication path.

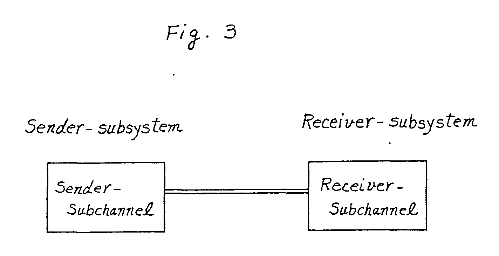

Figure 3 shows a connection as provided in the communication link employed in an embodiment of this invention (only one sender sub-channel and only one receiver sub-channel are shown).

The sub-channels in one communication channel are logically independent of each other, but they are dependent on each other in terms of performance since they operate using the same hardware in common. In addition, a single physical communication path can also be operated in such form that it is commonly used by a plurality of logically independent communication links.

Sender and receiver sub-channels have separate stop and operating modes individually settable for respective sub-channels. When a pair of sender and receiver sub-channels forming a single communication path are both in their operating modes, data transfer over the communication path is possible.

Start and stop of the sub-channels are controlled by SIO instructions and halt IO instructions (HIO instructions). When sender and receiver sub-channels forming a communication path in a stop mode are both started by SIO instructions, the communication path commences data transfer operation.

Data transfer over the communication path is performed in terms of units of data stored in single sender buffer areas, namely queue elements (QE). The length of a queue element QE is taken to be equal to the length of the buffer area storing that element and the entire contents of a single sending buffer area of the sender subsystem is transferred to a corresponding receiving buffer area of the receiver subsystem. Transfer of a single QE is performed at a high speed by means of the following three operations in relation to a communication path. Namely,

1. Reading QE from a sending buffer by means of a sender sub-channel,

2. Transferring QE to a receiver sub-channel from the sender sub-channel, and

3. Writing QE into a receiving buffer area by means of the receiver sub-channel.

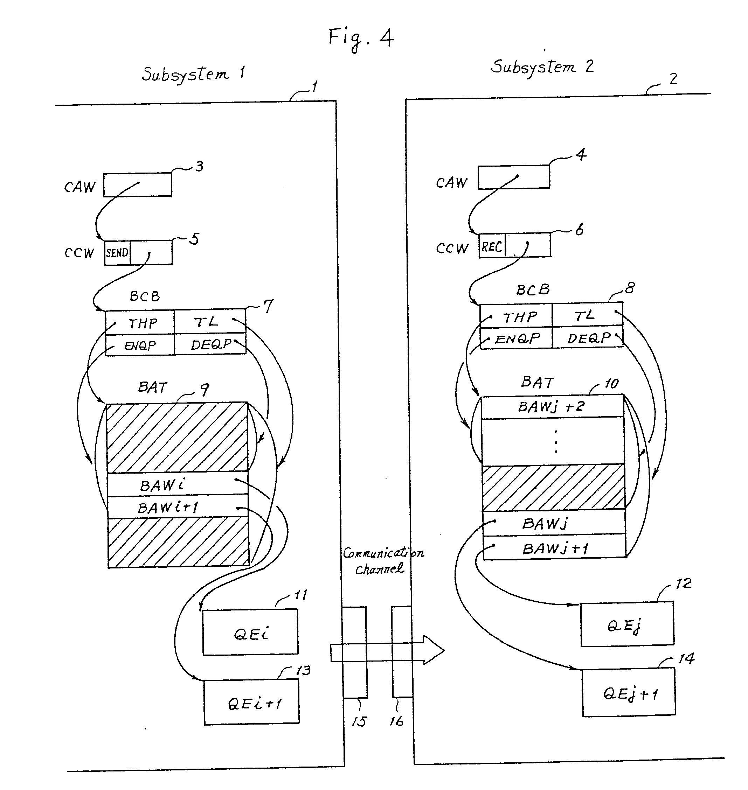

Data transfer operations as effected in an embodiment of this invention will be explained with reference to Figs. 4 to 9.

Figure 4 indicates a communication system of an embodiment of this invention. In this Figure, 1 and 2 are main storages of subsystems 1 and 2. 3 and 4 are channel address words (CAW) of subsystems 1 and 2, in each of which words a protection key and a header address of a channel command word to be used in a protection mechanism for access to main storage are stored. The contents of a CAW are given to a sender (or receiver) sub-channel while a CPU is executing an SIO instruction.

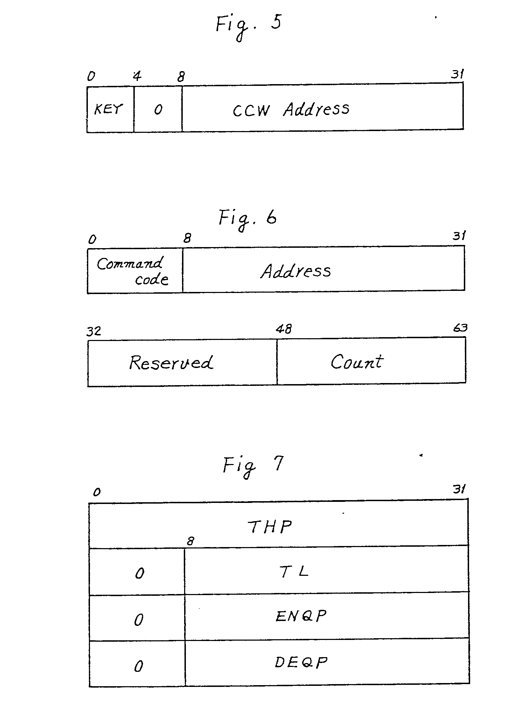

Figure 5 indicates the profile of a channel address word CAW.

In Figure 4, 5, 6 are channel control words (CCW) of subsystems 1 and 2.

Figure 6 shows the format of such channel control words.

A command code of a channel control word indicates either SEND, RECEIVE, or SENSE. A SEND command is effective only in respect of a sender subchannel and is used to change the sender sub-channel mode from stop to operation. A RECEIVE command is effective only in relation to a receiver sub-channel and is used to change the receiver sub-channel mode from stop to operation. The SENSE command is effective in relation to sender/receiver sub-channels and is used for storing SENSE information into main storage when the sub-channels hold such SENSE information.

The address part of a CCW indicates the header address of a sending buffer control block in relation to a SEND command, the header address of a receiving buffer control block in relation to a RECEIVE command and the header address of a SENSE information storage area in relation to a SENSE command.

The count field part of a CCW is not used in relation to SEND or RECEIVE commands but indicates a value of SENSE information to be stored in relation to a SENSE command.

In Figure 4, 7 and 8 are buffer control blocks (BCB) of subsystems 1 and 2.

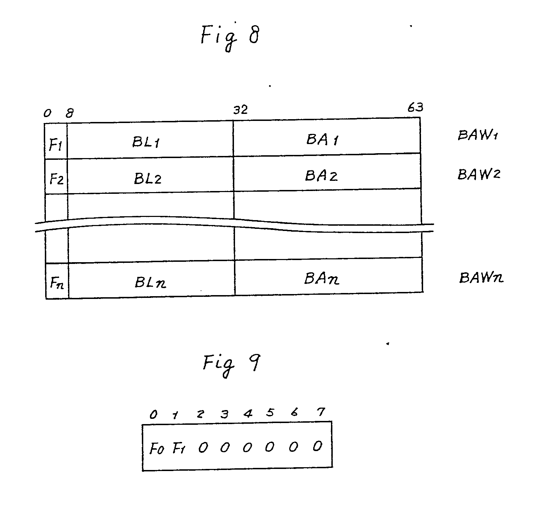

Figure 7 indicates the format of a BCB.

In the described embodiment, BCB is provided on main storage but it can alternatively be provided on a register.

In a BCB, THP indicates the header address of a buffer address table (BAT), TL indicates the number of entries in the buffer address table. An enqueue pointer (ENQP) specifies an entry number (0 to TL—1) of the buffer address table and thereby specifies a buffer to be enqueued next. A dequeue pointer (DEQP) specifies an entry number (0 to TL—1) of the buffer address table and specifies a buffer to be dequeued next.

Both ENQP and DEQP are updated by an increment of 1 for every enqueue or dequeue of a queue element QE. When ENQP or DEQP reach TL—1 they are then updated to 0.

In Figure 4, 9 and 10 are buffer address tables BAT of subsystems 1 and 2.

Figure 8 shows the format of a buffer address table. Each entry in the table of Figure 8 consists of 8 bytes and is called a buffer address word (BAW). Each BAW consists of a flag field (F), a buffer length field (BL) and a buffer address field (BA).

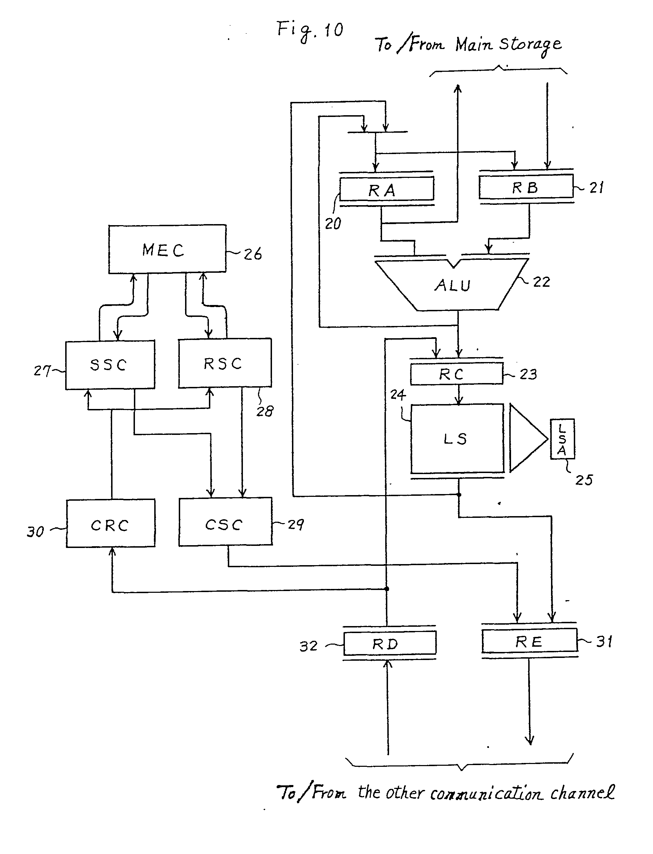

F is defined by bits used for controlling interruption. Figure 9 shows an example of such bits. BL indicates the length of a sending or receiving buffer (that is a single buffer area), while BA indicates the header address of the buffer.

Bits 0, 1 in Figure 9 are assigned for interruption control use and programs in the sender subsystem can control interruptions by setting/resetting these bits when the contents of a sending buffer specified by a BAW are transferred to a receiving buffer. When the bit 0 (F0) is set, interruption is reported in the sender subsystem, and when the bit 1 (F1) is set, interruption is reported in the receiver subsystem.

In Figure 4, 11 to 14 are buffers (buffer areas) specified by BAW's. QE indicates that a queue element is stored in a buffer area or buffer.

In Figure 4, 15 and 16 are communication channels which are hardware mechanisms for data transfer, which data transfer is effected asynchronously with the execution of CPU programs.

Data transfer from the sender subsystem to the receiving subsystem will be explained with reference to Figure 4.

Figure 4 indicates a one-way communication path in which subsystem 1 is provided on the sending side, and subsystem 2 on the receiver side. When another one-way communication path, for the reverse direction, is provided, a two-way communication path can be realized between subsystem 1 and subsystem 2.

Programs in the sender subsystem write queue element (QE) format data into a sending buffer specified by the enqueue pointer of the sending buffer control block and instruct data transfer to the communication path by updating the enqueue pointer.

Programs can recognise que element transfer to the receiver subsystem by setting bit 0 of the buffer address word (BAW) (of the flag field) specified by the enqueue pointer to 1 before updating of the enqueue pointer. When bit 1 is set to 1, programs of the other (receiver) subsystem are informed of queue element transfer. Thereby, an interruption occurs and this is indicated by means of the channel status word (CSW) stored at that time.

Programs are capable of enqueueing continuously until the enqueue pointer reaches the dequeue pointer value −1. In these queueing operations, programs do not use SIO instructions at all and it is apparent that overheads are reduced as compared with the conventional method.

A sender sub-channel of the communication path in the operating mode checks at regular intervals whether or not there is a queue element to be transferred to the other (receiver) subsystem. In other words, the sender sub-channel compares the enqueue pointer and dequeue pointer at regular intervals to determine whether or not they coincide.

When they coincide, the sender sub-channel recognizes a condition in which there is no queue element to be transmitted and then enters a waiting condition for a certain period of time. When this condition has been repeatedly continuously recognized a certain number of times, the sender sub-channel causes an SIO instruction termination interruption for the sender subsystem and enters the stop mode.

If the enqueue pointer and dequeue pointer do not coincide, the sender subsystem recognizes a condition in which there is at least one queue element to be transmitted, and it checks whether the receiver subsystem can receive it or not. For example, it is checked whether a receiving buffer indicated by the enqueue pointer in the receiving system is full or not, or whether or not the length of the receiving buffer is longer than the length of a sending queue element. When reception is possible, the communication path starts queue element transfer operation. The transfer operation is complete when the transferred queue element (or elements) is stored in the receiving buffer(s), the enqueue pointer in the receiving side is updated, and the dequeue pointer in the sending side is updated. At this time, if bit 0 of the BAW in the sending side is 1, interruption occurs in the sending side, and when bit 1 is 1, interruption occurs in the receiver side, indicating that the queue element has been transferred. In the described embodiment, even when such an interruption occurs, the operating mode is still maintained — the stop mode is not entered. When a single transfer of a queue element is complete, it is checked whether or not there is a next queue element to be transferred. Thereafter, the aforementioned operations are repeated.

Programs in the receiver side dequeue a queue element of the receiver buffer from that buffer. Moreover, programs in the receiver side may compare the enqueue pointer and dequeue pointer in the receiving buffer control block. When they coincide, it is recognized that there is no queue element to be dequeued, but if they do not coincide, it is recognized that there is a queue element to be dequeued. When they do not coincide, the program dequeues and updates the dequeue pointer.

The program in the receiver side may dequeue a queue element, without comparing pointers, by the triggering of the aforementioned interruption specified by bit 1 of sender BAW.

It is alternatively possible to employ a method in which buffer final address information is provided in place of buffer length information in a BAW.

Operations of sender side programs, communication path and receiver side programs are described above, and these can operate simultaneously and thereby a high speed data transfer can be realized.

Moreover, since interruptions are minimized, overheads accruing to interruptions are successfully reduced.

A specific data transfer operation is explained below with reference to the block diagram of a communication channel given in Figure 10.

In Figure 10, 20 is a register (RA) used as one input register of an ALU 22 and as a buffer register during writing into main storage; 21 is a register (RB) used as another input register of ALU 22 and as a buffer register during readout from main storage; 22 is an arithmetic addition/subtraction circuit (ALU); 23 is a buffer register (RC) used during writing into LS 24; 24 is a local storage (LS) used as a buffer for data of queue elements QE; 25 is an LS address register (LSA); 26 is a main storage access control circuit (MEC); 27 is a sender subchannel (SSC); 28 is a receiver subchannel (RSC); 29 is a command sending control circuit (CSC); 30 is a command receiving control circuit (CRC); 31 is a buffer register (RE) for sending data to another channel; and 32 is a buffer register (RD) for receiving data from another channel.

The communication channel indicated in Figure 10 has a structure capable of simultaneously executing sending and receiving operations. A sending operation is controlled by sender subchannel ((SSC) 27, while a receiving operation is controlled by receiver subchannel (RSC) 28, respectively.

The sender sub-channel 27 is coupled with the receiver sub-channel of another system and the receiver sub-channel 28 is connected to the sender sub-channel of another system, and thereby a series of transfers of queue elements QE becomes possible.

(i) Operation of Sender Sub-channel 27.

The sender sub-channel 27 checks whether there is any QE to be transmitted at constant intervals when it enters operating mode. This sub-channel reads ENQP and DEQP from main storage and sets ENQP into register RA 20 and DEQP into register RB 21. The ALU 22 compares the contents of 20 and 21. When the contents coincide, it is recognized that there is no QE to be transmitted, but when they do not coincide, it is recognized that there is a QE to be transmitted. If the contents do not coincide, SSC 27 issues a command SRQ to a receiver sub-channel of the other system in order to inquire whether or not QE can be received thereby. This command SRQ is sent to command sending control circuit (CSC) 29 by SSC 27, while CSC 29 sets that command into register RE 31 and sends it to the other system. An answer command sent from the other system is received by register RD 32, partly interpreted by the command receiving control circuit (CRC) 30 and then handed to SSC 27. The answer command is classified either as a command ROK which indicates the possibility of reception, or as a command RNŌK which indicates the impossibility of reception. If SSC 27 receives RNŌK, it enters a waiting mode until it receives an ROK command.

When SSC 27 receives an ROK command, it loads the queue element QE on the main storage into LS 24 to a specified length (for example, 64 bytes, which unit is called a block hereafter), and issues a sending command SD in order to send this one block of data to the other system. SSC 27 sends the SD command to CSC 29, which then sends the specified amount of data beginning with the SD command to RE 31. This block of data contains an SD command field, bits for indicating whether or not it is a final block, bits requesting interruption of the other system and bits for indicating the length of block. The block transfer is continued until the last block of QE is transferred, and when the final block is transmitted, the sender sub-channel (SSC) 27 waits for a reception end reporting command (RCP) sent from the receiver sub-channel of the other system.

When SSC 27 receives the command RCP, it updates DEQP. Updating of DEQP is effected as follows. The DEQP of BCB is loaded into register RB 21, a specified value is added by ALU 22 and the results placed in register RA 20. Then, TL of BCB is loaded into register RB 21 and the contents (ENQP) of RA 20 and RB 21 are compared by ALU 22. When they coincide, zero is stored in the DEQP of main storage as the updated value of DEQP. If they do not coincide, a value of RA 20 is stored in the DEQP. Transfer of a single QE is completed by the abovementioned operations and thereafter transfer operations for a next QE are repeated.

(ii) Operation of Receiver Sub-channel 28

The receiver sub-channel 28 waits, when it enters operation mode, for a send request command SRQ transmitted from the sender sub-channel of the other system. The command SRQ is partly interpreted by CRC 30 when it is received by the register RD 32 and then handed over to RSC 28. RSC 28 reads ENQP and DEQP from the BCB of main storage in order to check possibility of reception and sets them into registers RA 20 and RB 21, respectively.

They are compared by ALU 22. When they coincide, reception is judged to be impossible, and when they do not coincide reception is judged to be possible.

If reception is possible, a command ROK is generated to the sender sub-channel of the other system, if reception is impossible, the command RNŌK is generated, waiting for the reception of an SD command.

When an SD command is received, a command part thereof is handed to RSC 28 via CRC 30 and a succeeding data part is written into LS 24 under the control of CRC 30.

Upon verifying that a block has been written into LS 24, RSC 28 writes that block on main storage. This operation is repeated until a final block is written on main storage. When the final block has been written, the ENQP corresponding to said sub-channel is updated. Thereby the ENQP is loaded to register RB 21 from main storage, a specified value is added, and thereafter the total value is set in register RA 20. Then, TL in BCB is loaded into register RB 21 and compared with the content of RA 20. If they coincide, zero is stored in ENQP as the value after updating. If they do not coincide, the contents of RA 20 is stored in ENQP. When the above updating of ENQP is complete, the receiver sub-channel 28 indicates the end of reception with a command RCP. Thereafter, when the next QE send request is received, similar operations are repeated.

As explained above, in an inter-subsystem communication system embodying this invention, it is no longer necessary to issue an SIO instruction for each data transfer and therefore the generation of interruptions is minimized and highly efficient data transfer can be realized.

An embodiment of the present invention provides a communication system between computer systems which can realize highly efficient data transfer in a data processing system which comprises first and second subsystems operating under the control of independent or common operating system. There are provided in the sender subsystem a plurality of sending buffers, a sending buffer address table having a plurality of entries, and a buffer control block. In the receiver subsystem, there are provided a plurality of receiving buffers, a receiving buffer address table having a plurality of entries, and a buffer control block. Also, a communication path for transferring the data stored in a sending buffer to a receiving buffer is provided.

**Claims**

1. An intersubsystem communication system, comprising a communication channel, having sender and receiver sides, and sender and receiver subsystems, between which the channel is connected, having each:

a plurality (*n, m*) of buffers on main storage,

a buffer address table, on main storage, having a plurality of entries each containing header address and length or final address information for a corresponding buffer, and

a buffer control block, on main storage or on a register of the subsystem, including the header address and the number of entries of the buffer address table, and enqueue and dequeue pointers indicating the respective addresses of entries in the buffer address table relating to data to be enqueued next and data to be dequeued next;

whereby programs are operable to enqueue data continuously, by placing data as queue elements in successive buffers of such a subsystem and successively updating the enqueue pointer pertinent to those buffers, until further updating of that pointer would cause it to coincide with the pertinent dequeue pointer, and are operable to dequeue data, from buffers in such a subsystem, until the pertinent enqueue and dequeue pointers coincide,

the sender side comprising,

a sender sub-channel, operable to read the sender subsystem pointers,

comparison means, operable to compare those pointers and on the basis of the result of the comparison to recognise a condition in which the sender subsystem buffers contain a queue element for transfer to the receiver subsystem buffers via the communication channel,

means operable, in the event of such recognition, to transmit an enquiry signal to the receiver side, to determine whether or not the receiver subsystem buffers are able to accept such transfer of a queue element,

the sender sub-channel being further operable to interpret a reply signal sent from the receiver side in response to the enquiry signal, and when the reply signal indicates that such transfer can be accepted, to initiate a queue element transfer operation to store the queue element for transfer in a receiver subsystem buffer and to update the sender subsystem dequeue pointer when the transfer operation is complete, as indicated by a transfer completion signal sent from the receiver side,

the receiver side comprising,

a receiver sub-channel, operable upon receipt of the enquiry signal to read the receiver subsystem pointers,

comparison means, operable to compare those pointers and on the basis of the result of the comparison to recognise a condition in which the receiver subsystem buffers are able to accept transfer thereto of a queue element,

means operable to provide the said reply signal, indicating whether or not transfer is acceptable,

the receiver sub-channel being further operable, when a queue element has been transferred and stored in a receiver subsystem buffer, to update the receiver subsystem enqueue pointer and to issue the said transfer completion signal.

2. A system as claimed in claim 1, wherein one indicator bit for requesting interruption in the receiver subsystem is provided in each entry of the sender system buffer address table, the system being operable so that when a sender subsystem program sets that indicator bit, the receiver subsystem is informed of an interruption when the contents of a sender buffer specified by the entry concerned are transferred to a receiver buffer of the receiver subsystem.

3. A system as claimed in claim 1 or 2, wherein one indicator bit for requesting interruption in the sender subsystem is provided at each entry of the sending buffer address table, and the system being operable so that when a sender subsystem program sets that bit, the sender subsystem is informed of an interruption when the contents of a sender buffer indicated by the entry are transferred to a receiving buffer of the receiver subsystem.

4. A system as claimed in any preceding claim wherein the sender and receiver subchannels have stop and operating modes individually settable for the respective sub-channels under control of SIO instructions and HIO instructions, wherein both subchannels enter an operative mode by means of I/O start instrutions issued by both sender and receiver subsystems, whereafter operations for transferring queue elements are continued until an I/O stop instruction is issued by one of the sender and receiver subsystems, or until no send request is issued from the sending side for a specified period, or until any cause which makes transfer operation impossible is detected.

5. A system as claimed in claim 4, wherein the sender subchannel is operable, in the event of repeated coincidence of the enqueue and dequeue pointers of the sender buffer control block, to issue an SIO instruction termination interruption for the sender subsystem and to enter a stop mode.

6. A system as claimed in any preceding claim wherein the sender subsystem is operable to write data into a sending buffer indicated by the enqueue pointer of the sending buffer control block, without indicating queue element transfer using an SIO instruction, and simultaneously to indicate queue element transfer by updating that enqueue pointer, wherein the dequeue pointer of the sending buffer control block is compared with the enqueue pointer to start transfer when non-coincidence is detected, and the dequeue pointer is updated when data transfer is complete.

7. A system as claimed in any preceding claim, wherein the sender subsystem is equipped also as a receiver subsystem and the receiver subsystem is equipped also as a sender subsystem.

8. A system as claimed in any preceding claim wherein the sender and receiver subsystems operate under control of respective independent operating systems.

9. A communication system as claimed in any one of claims 1 to 7, wherein the sender and receiver subsystems operate under control of a common operating system.

## Revendications

1. Système de transmission entre des sous-systèmes, comprenant une voie de transmission, ayant des côtés émetteur et récepteur, et des sous-système émetteurs et récepteurs, entre lesquels la voie de transmission est connectée, comportant chacun:

un ensemble (*n, m*) de tampons en mémoire centrale,

une table d'adresses de tampon, en mémoire centrale, comportant un ensemble d'éléments qui contiennent chacun une information d'adresse en-tête et une information de longueur ou d'adresse finale pour un tampon correspondant, et

un bloc de commande de tampon, en mémoire centrale ou dans un registre du sous-système, incluant l'adresse en-tête et le nombre d'éléments de la table d'adresses de tampon, et des indicateurs de mise en file d'attente et de retrait de la file d'attente qui indiquent les adresses respectives d'éléments dans la table d'adresses de tampon relatives aux données à mettre en file d'attente ensuite et aux données à retirer de la file d'attente ensuite;

des programmes pouvant de la sorte être exécutés pour effectuer d'une manière continue une mise en file d'attente de données, en plaçant des données comme éléments de file d'attente dans des tampons successifs de ce sous-système et en mettant à jour successivement l'indicateur de mise en file d'attente correspondant à ces tampons, jusqu'à ce qu'une autre mise à jour de cet indicateur le fasse coïncider avec l'indicateur de retrait de la file d'attente correspondant, et ces programmes pouvant être exécutés pour retirer de la file d'attente des données provenant de tampons de ce sous-système, jusqu'à ce que les indicateurs de mise en file d'attente et de retrait de la file d'attente correspondants coïncident,

le côté émetteur comprenant:

une sous-voie de transmission d'émetteur, pouvant être mise en fonctionnement pour lire les indicateurs de sous-système d'émetteur,

un moyen de comparaison, pouvant être mis en fonctionnement pour comparer ces indicateurs et, sur la base du résultat de la comparaison, pour identifier un état dans lequel les tampons de sous-système émetteur contiennent un élément de file d'attente pour un transfert jusqu'aux tampons de sous-système récepteur par l'intermédiaire de la voie de transmission,

un moyen pouvant être mis en fonctionnement, dans le cas de l'identification, pour transmettre un signal d'interrogation au côté récepteur, pour déterminer si les tampons de sous-système récepteur sont ou non en mesure d'accepter ce transfert d'un élément de file d'attente,

la sous-voie de transmission d'émetteur pouvant en outre être mise en fonctionnement pour décoder un signal de réponse envoyé par le côté récepteur en réponse au signal d'interrogation, et, quand le signal de réponse indique que ce transfert peut être accepté, pour déclencher une opération de transfert d'élément de file d'attente afin de mémoriser l'élément de file d'attente en vue d'un transfert dans un tampon de sous-système récepteur et afin de mettre à jour l'indicateur de retrait de la file d'attente de sous-système émetteur quand l'opération de transfert est terminée, tel qu'indiqué par un signal de fin de transfert envoyé par le côté récepteur,

le côté récepteur comprenant:

une sous-voie de transmission de récepteur, pouvant être mise en fonctionnement à la réception du signal d'interrogation pour lire les indicateurs de sous-système récepteur,

un moyen de comparaison, pouvant être mis en fonctionnement pour comparer ces indicateurs et, sur la base du résultat de la comparaison, pour identifier un état dans lequel les tampons de sous-système récepteur sont en mesure d'accepter un transfert jusqu'à ceux-ci d'un élément de file d'attente,

un moyen pouvant être mis en fonctionnement pour fournir le signal de réponse, indiquant si un transfert est ou non acceptable,

la sous-voie de transmission de récepteur pouvant en outre être mise en fonctionnement, quand un élément de file d'attente a été transféré et mémorisé dans un tampon de sous-système récepteur, pour mettre à jour l'indicateur de mise en file d'attente de sous-système récepteur et pour émettre le signal de fin de transfert.

2. Système selon la revendication 1, dans lequel un bit indicateur pour demander une interruption dans le sous-système récepteur est prévu dans chaque élément de la table d'adresses de tampon de système émetteur, le système pouvant être mis en fonctionnement pour que, quand un programme des sous-système émetteur met à 1 ce bit indicateur, le sous-système récepteur soit informé d'une interruption quand le contenu d'un tampon d'émetteur spécifié par l'élément de table concerné est transféré jusqu'à un tampon de récepteur du sous-système récepteur.

3. Système selon l'une quelconque des revendications 1 et 2, dans lequel un bit indicateur pour demander une interruption dans le sous-système émetteur est prévu dans chaque élément de la table d'adresses de tampon d'émission, et le système pouvant être mis en fonctionnement pour que, quand un programme de sous-système émetteur met à 1 ce bit, le sous-système émetteur soit informé d'une interruption quand le contenu d'un tampon d'émetteur indiqué par l'élément de table est transféré jusqu'à un tampon de réception du sous-système récepteur.

4. Système selon l'une quelconque des revendications 1 à 3, dans lequel les sous-voies de transmission d'émetteur et de récepteur ont des modes d'arrêt et de fonctionnement pouvant être établis séparément pour les sous-voies de transmission respectives sous la commande d'instructions de départ d'entrée-sortie (SIO) et d'instructions d'arrêt d'entrée-sortie (HIO), dans lequel les deux sous-voies de transmission entrent dans un mode de fonctionnement au moyen d'instructions de départ d'E/S émises par les deux sous-systèmes émetteur et récepteur, des opérations de transfert d'éléments de file d'attente étant ensuite poursuivies jusqu'à ce qu'une instruction d'arrêt d'E/S soit émise par un des sous-systèmes émetteur et récepteur, ou jusqu'à ce qu'il n'y ait pas de demande d'émission émise par le côté d'émission pendant une période spécifiée, ou jusqu'a ce que toute cause qui rend impossible une opération de transfert soit détectée.

5. Système selon la revendication 4, dans lequel la sous voie de transmission d'émetteur peut être mise en fonctionnement, dans le cas d'une coïncidence répétée des indicateurs de mise en file d'attente et de retrait de la file d'attente du bloc de commande de tampon d'émetteur, pour émettre une interruption de fin d'instruction SIO pour le sous-système émetteur et pour entrer dans un mode d'arrêt.

6. Système selon l'une quelconque des revendications 1 à 5, dans lequel le sous-système émetteur peut être mis en fonctionnement pour écrire des données dans un tampon d'émission indiqué par l'indicateur de mise en file d'attente du bloc de commande de tampon d'émission, sans indiquer un transfert d'élément de file d'attente en utilisant une instruction SIO, et pour indiquer simultanément un transfert d'élément de file d'attente en mettant à jour cet indicateur de mise en file d'attente, dans lequel l'indicateur de retrait de la file d'attente du bloc de commande de tampon d'émission est comparé à l'indicateur de mise en file d'attente pour commencer un transfert quand une absence de coïncidence est détectée, et l'indicateur de retrait de la file d'attente est mis à jour quand un transfert de données est terminé.

7. Système selon l'une quelconque des revendications 1 à 6, dans lequel le sous-système émetteur est équipé également comme un sous-système récepteur et le sous-système récepteur est équipé également comme un sous-système émetteur.

8. Système selon l'une quelconque des revendications 1 à 7, dans lequel les sous-systèmes émetteur et récepteur fonctionnent sous la commande de systèmes d'exploitation indépendants respectifs.

9. Système de transmission selon l'une quelconque des revendications 1 à 7, dans lequel les sous-systèmes émetteur et récepteur fonctionnent sous la commande d'un système d'exploitation commun.

**Patentansprüche**

1. Intersubsystem-Kommunikationssystem, mit einem Kommunikationskanal, der Sender- und Empfängerseiten hat, und Sender- und Empfänger-Subsystemen, zwischen denen der Kanal angeschlossen ist mit jeweils:
einer Vielzahl von (n, m) von Puffern auf einem Hauptspeicher,

einer Pufferadressentabelle, auf dem Hauptspeicher, die eine Vielzahl von Einträgen hat, die jeweils eine Kopfadresse und Längen- oder Endadresseninformation für einen entsprechenden Puffer haben, und

einem Puffersteuerblock, auf dem Hauptspeicher oder auf einem Register des Subsystems, der die Kopfadresse und die Anzahl der Einträge der Pufferadressentabelle einschließt, und Einreihungs- und Freigabezeiger, die die jeweiligen Adressen der Einträge in der Pufferadressentabelle bezüglich der Daten, die als nächste in die Schlange eingereiht, und der Daten, die als nächste aus der Schlange freigegeben werden sollen, anzuzeigen;

wodurch Programme betrieben werden können, um Daten kontinuierlich einzureihen, indem Daten als Schlangenelemente in aufeinander folgende Puffer eines solchen Subsystem plaziert werden und sukzessiv die Einreihungszeiger, die zu jenen Puffern gehören, zu aktualisieren, bis ein weiteres Aktualisieren des genannten Zeigers bewirken würde, daß er mit dem zugehörigen Friegabezeiger koinzidiert, und um Daten, aus Puffern in solch einem Subsystem, freizugeben, bis die zugehörigen Einreihungs- und Freigabezeiger koinzidieren,

wobei die Senderseite umfaßt,

einen Sendersubkanal, der betrieben werden kann, um die Sendersubsystemzeiger zu lesen,

Vergleichseinrichtungen, die betrieben werden können, um diese Zeiger zu vergleichen und auf der Basis des Ergebnisses dieses Vergleiches einen Zustand zu erkennen, in welchem die Sendersubsystempuffer ein Schlangenelement zur Übertragung zu den Empfängersubsystempuffern über den Kommunikationskanal enthalten,

Einrichtungen, die im Falle einer solchen Erkennung betrieben werden können, um ein Anfragesignal an die Empfängerseite zu übertragen, um zu bestimmen, ob die Empfängersubsystempuffer in der Lage sind, solch eine Übertragung eines Schlangenelementes zu akzeptieren oder nicht,

wobei der Sendersubkanal ferner betreibbar ist, um ein Antwortsignal zu interpretieren, welches von der Empfängerseite in Abhängigkeit von dem Abfragesignal gesendet wurde, und, wenn das Antwortsignal anzeigt, daß solch ein Transfer akzeptiert werden kann, den Transferbetrieb eines Schlangenelementes zu initiieren, um das Schlangenelement für den Transfer in einen Empfängersubsystempuffer zu speichern und den Freigabezeiger des Sendersubsystems zu aktualisieren, wenn der Übertragungsbetrieb vollständig ist, wie es durch ein von der Empfängerseite gesendetes Übertragungsvervollständigungssignal angezeigt wird,

wobei die Senderseite umfaßt,

einen Empfängersubkanal, der bei Empfang des Anfragesignals betreibbar ist, um die Empfängersubsystemzeiger zu lesen,

Vergleichseinrichtungen, die betreibbar sind, um jene Zeiger zu vergleichen und auf der Basis des Ergebnisses des Vergleiches einen Zustand zu erkennen, in welchem die Empfängersubsystempuffer fähig sind, den Transfer eines Schlangenelementes zu ihnen zu empfangen,

Einrichtungen, die betreibbar sind, um ein Antwortsignal zu erzeugen, welches anzeigt, ob ein Transfer akzeptabel ist oder nicht,

der Enpfängersubkanal ferner betreibbar ist, wenn ein Schlangenelement übertragen worden und in einem Empfängersubsystempuffer gespeichert worden ist, um den Einreihungszeiger des Empfängersubsystems zu aktualisieren und das genannte Übertragungsvervollständigungssignal auszugeben.

2. System nach Anspruch 1, bei welchem ein Anzeigebit zur Anforderung einer Unterbrechung in dem Empfängersubsystem in jedem Eintrag der Sendersystempufferadressentabelle vorgesehen ist, wobei das System so betreibbar ist, daß dann, wenn ein Sendersubsystemprogramm das Anzeigebit setzt, das Empfängersubsystem von einer Unterbrechung informiert wird, wenn der Inhalt eines Senderpuffers, der durch den betreffenden Eintrag speizifiziert ist, zu einem Empfängerpuffer des Empfängersubsystems übertragen wird.

3. System nach Anspruch 1 oder 2, bei welchem ein Anzeigebit zur Anforderung einer Unterbrechung in dem Sendersubsystem bei jedem Eintrag der sendenden Pufferadressentabelle vorgesehen ist, und das System so betreibbar ist, daß dann, wenn ein Sendersubsystemprogramm jenes Bit setzt, das Sendersubsystem von einer Unterbrechung informiert wird, wenn der. Inhalt eines Senderpuffers, der durch den Eintrag angezeigt ist, zu einem Empfängerpuffer des Empfängersubsystems übertragen wird.

4. System nach einem der vorhergehenden Ansprüche, bei welchem Sender- und Empfängersubkanäle Stop- und Betriebsmoden haben, die individuell für die jeweiligen Subkanäle unter Steuerung der SIO-Anweisungen und der HIO-Anweisungen einstellbar sind, wobei beide Subkanäle in einen Betriebsmodus eintreten, mit Hilfe der I/O-Startanweisungen, die von beiden Sender- und Empfängersubsystemen ausgegeben werden, woraufhin Betriebe zur Übertragung von Schlangenelementen fortgesetzt werden, bis eine I/O-Stopanweisung durch einen der Sender- und Empfängersubsysteme ausgegeben wird, oder bis eine spezifische Periode lang keine Sendeanforderung von der sendenden Seite ausgegeben wird, oder bis irgendeine Ursache, welche einen Transferbetrieb unmöglich macht, festgestellt wird.

5. System nach Anspruch 4, bei welchem der Sendersubkanal, im Falle wiederholter Koinzidenz der Einreihungs- und Freigabezeiger des Senderpuffersteuerblocks, betreibbar ist, um eine SIO-Anweisungsbeendigungsunterbrechung für das Sendersubsystem auszugeben und in einen Stopmodus einzutreten.

6. System nach einem der vorhergehenden Ansprüche, bei welchem das Sendersubsystem betreibbar ist, um Daten in einen sendenden Puffer einzuschreiben, der durch den Einreihungszeiger des sendenden Puffersteuerblocks angezeigt ist, ohne einen Schlangenelementtransfer anzuzeigen, unter Verwendung einer SIO-Anweisung, und um gleichzeitig einen Schlangenelementtransfer durch Aktualisieren des Einreihungszeigers anzuzeigen, bei welchem der Freigabezeiger des sendenden Puffersteuerblocks mit dem Einreihungszeiger verglichen wird, um den Transfer zu starten, wenn Nichtkoinzidenz festgestellt wird, und der Freigabezeiger aktualisiert wird, wenn der Datentransfer vollständig ist.

7. System nach einem der vorhergehenden. Ansprüche, bei welchem das Sendersubsystem auch als ein Empfängersubsystem ausgerüstet ist und das Empfängersubsystem auch als ein Sendersubsystem ausgerüstet ist.

8. System nach einem der vorhergehenden Ansprüche, bei welchem Sender- und Empfängersubsysteme unter der Steuerung der jeweils unabhängig arbeitenden Systeme arbeiten.

9. Kommunikation system nach einem der Ansprüche 1 bis 7, bei welchem Sender- und Empfängersubsysteme unter der Steuerung eines gemeinsamen Betriebssystems arbeiten.

Fig. 1

Subsystem 1

Subsystem 2

Fig 2

Host Subsystem     I/O Subsystem

1

Fig. 3

Sender- subsystem          Receiver- subsystem

| Sender- Subchannel | Receiver- Subchannel |

# Fig. 4

Subsystem 1                                          Subsystem 2

CAW [_____] ⌐3          CAW [_____] ⌐4

CCW [SEND|____] ⌐5             CCW [REC|____] ⌐6

BCB                             BCB

| THP | TL | ⌐7               | THP | TL | ⌐8
| ENQP | DEQP |               | ENQP | DEQP |

BAT  ⌐9                        BAT  ⌐10

|//////////////|              | BAWj +2 |
|//////////////|              |    ⋮    |
|//////////////|              |//////////////|
| BAWi |                      |//////////////|
| BAWi+1 |                    | BAWj |
|//////////////|              | BAWj+1 |

Communication
Channel

| QEi | ⌐11                   | QEj | ⌐12

| QEi+1 | ⌐13                 | QEj+1 | ⌐14

15   16

Fig. 5

| 0 | 4 | 8 | 31 |
|---|---|---|---|
| KEY | 0 | CCW Address | |

Fig. 6

| 0 | 8 | 31 |
|---|---|---|
| Command code | Address | |

| 32 | 48 | 63 |
|---|---|---|
| Reserved | Count | |

Fig 7

| 0 | | 31 |
|---|---|---|
| THP | | |
| 0 | TL | |
| 0 | ENQP | |
| 0 | DEQP | |

## Fig 8

| | | | |
|---|---|---|---|
| $F_1$ | $BL_1$ | $BA_1$ | $BAW_1$ |
| $F_2$ | $BL_2$ | $BA_2$ | $BAW_2$ |
| $F_n$ | $BL_n$ | $BA_n$ | $BAW_n$ |

0   8                                    32                                    63

## Fig 9

0  1  2  3  4  5  6  7

| $F_0$ | $F_1$ | 0 | 0 | 0 | 0 | 0 | 0 |
|---|---|---|---|---|---|---|---|

Fig. 10

To/From Main Storage

To/From the other communication channel